# EUROPEAN PATENT APPLICATION

(11) **EP 4 794 074 A1**
(43) Date of publication of application: **19.08.2026**
(21) Application number: 24877019.0
(22) Date of filing: 24.09.2024
(51) Int. Cl.: H01M 50/204, H01M 10/647, H01M 10/658, H01M 50/209, H01M 50/291, H01M 50/293, H01M 50/342

(54) **BATTERY PACK AND STRUCTURE**

(30) Priority: 12.10.2023 JP 2023176826
(71) Applicant: IBIDEN CO., LTD., Ogaki-shi, Gifu 503-8604 (JP)
(72) Inventor: MUKAIYAMA, Kenji, Ibi-gun, Gifu 501-0695 (JP); ANDO, Hisashi, Ibi-gun, Gifu 501-0695 (JP); ICHIHARA, Hiroki, Ibi-gun, Gifu 501-0695 (JP); YAMAMOTO, Yuya, Ibi-gun, Gifu 501-0695 (JP)
(74) Representative: Hoefer & Partner Patentanwälte mbB
(86) International application number: PCT/JP2024/033924
(87) International publication number: WO 2025/079420

(57) **Abstract**

Provided is a battery pack including a mica plate that is resistant to damage and is lightweight. The battery pack of the present invention includes a module with a plurality of battery cells; a case containing the module; and a mica plate disposed between the module and the case and having a first main face and a second main face opposite to the first main face, the battery pack further including an attaching member disposed on a surface of the mica plate to fix the mica plate, an area S1 of the attaching member being not less than 5.8 × 10⁻⁶ times an area S2 of the mica plate in a plan view of the mica plate.

## Description

### TECHNICAL FIELD

The present invention relates to battery packs and structures.

### BACKGROUND ART

A battery pack including a module with a plurality of battery cells and a case containing the module may generate gas or flame in the event of thermal runaway. Such gas or flame may spread to the surroundings, potentially inducing further thermal runaway.

In order to prevent the spread of gas or flame during thermal runaway, Patent Literature 1 discloses a battery pack including a module having a mica plate on its surface.

Specifically, Patent Literature 1 discloses a battery pack comprising a battery module and a mica plate for heat insulation, wherein the mica plate is removably fixed to the battery module by a connecting member and covers a plurality of the battery modules; the connecting member is divided into two parts, an upper part and a lower part, with the upper part of the connecting member fixing the mica plate to one of the battery modules, while the lower part of the connecting member penetrating the battery module to fix the battery module to a lower housing; a supporting member to support the mica plate is disposed between the mica plate and the battery modules, the supporting member being fixed to the upper part of the connecting member; and a wear-resistant material is disposed between the mica plate and a holder to prevent wear loss of the holder and the mica plate, the wear-resistant material being attached to the mica plate and completely covering the holder.

### CITATION LIST

### - Patent Literature

Patent Literature 1: CN 218334011 U

### SUMMARY OF INVENTION

### - Technical Problem

Weight reduction of battery packs has been demanded to enhance the handleability of battery packs.

The presence of a mica plate in a battery pack at a position described in Patent Literature 1 poses a problem of increasing the weight of the battery pack.

The weight of a battery pack like the one in Patent Literature 1 may be reduced by thinning the mica plate.

In Patent Literature 1, however, the mica plate is fixed to the battery module using a rivet, and in this case an impact on the battery pack causes high stress around the rivet hole.

Therefore, simply thinning the mica plate reduces the strength of the mica plate, unfortunately making the surrounding area of the rivet hole susceptible to damage.

The present invention has been made to solve the above problems. The present invention aims to provide a battery pack including a mica plate that is resistant to damage and is lightweight.

### - Solution to Problem

Specifically, a battery pack of the present invention includes: a module with a plurality of battery cells; a case containing the module; and a mica plate disposed between the module and the case and having a first main face and a second main face opposite to the first main face, the battery pack further including an attaching member disposed on a surface of the mica plate to fix the mica plate, an area S1 of the attaching member being not less than 5.8 × 10⁻⁶ times an area S2 of the mica plate in a plan view of the mica plate.

In the case where a mica plate has a hole and is fixed to the module by a fixing member such as a rivet inserted into the hole, the surrounding area of the hole is likely to have high stress upon impact.

In the present invention, the mica plate is attached to the module by an attaching member, while the ratio of the area S1 to the area S2 is within the above range. Thus, the stress can be distributed, thereby preventing damage in the mica plate.

In the battery pack of the present invention, the attaching member may attach at least one of the module or the case to the mica plate.

In the battery pack of the present invention, at least one of the module or the case may be provided with a connecting member, and the attaching member may attach the connecting member to the mica plate.

As described above, in the battery pack of the present invention, the attaching member may directly fix at least one of the module or the case to the mica plate, or may fix at least one of the module or the case to the mica plate via a connecting member.

In the battery pack of the present invention, the mica plate is preferably attached by a plurality of the attaching members.

The attachment of the mica plate at a plurality of positions enables stable fixing of the mica plate.

In the battery pack of the present invention, preferably, the mica plate is substantially tetragonal in a plan view, the mica plate in a plan view has an outline including a first side and a second side opposite to the first side, and an end portion of the mica plate to which the first side belongs and an end portion of the mica plate to which the second side belongs are fixed by the attaching members.

The presence of the attaching members at such positions enables stable fixing of the mica plate.

In the battery pack of the present invention, preferably, in a plan view of the mica plate, an area S1n of each attaching member is not less than 5.8 × 10⁻⁶ times the area S2 of the mica plate.

When the ratio of the S1n to the S2 is within the above range, stress applied to the mica plate can be reduced.

In the battery pack of the present invention, the attaching member may be a cured product of an adhesive or an insert-molded product.

Such an attaching member can suitably attach the mica plate to the module.

In the battery pack of the present invention, preferably, the mica plate has a ridge extending in a first direction on its first main face side.

The natural frequency of the mica plate is influenced by the length, Young's modulus, density, cross-sectional area, and second moment of the cross section of the mica plate. For example, a higher second moment of the cross section leads to a higher natural frequency.

When the natural frequency of the mica plate is higher than the vibration frequency of the surrounding environment, resonance does not occur, so that stress is less likely to occur in the mica plate.

When the mica plate in the battery pack of the present invention has a prescribed ridge, the mica plate has a higher second moment of the cross section than a flat mica plate having the same weight. In other words, the mica plate has a higher second moment of the cross section per unit weight.

Even when the battery pack of the present invention is placed in an environment with vibrations, the natural frequency of the mica plate is likely to be higher than the vibration frequency of the surrounding environment.

Thus, the mica plate is resistant to damage even when its thickness is reduced.

In the battery pack of the present invention, the mica plate preferably has a first protrusion on its first main face side.

The mica plate with such a shape has a higher second moment of the cross section than a flat mica plate having the same weight. In other words, the mica plate has a higher second moment of the cross section per unit weight.

Therefore, even when the battery pack of the present invention is placed in an environment with vibrations, the natural frequency of the mica plate is likely to be higher than the vibration frequency of the surrounding environment.

Thus, the mica plate is resistant to damage even when its thickness is reduced.

In the battery pack of the present invention, the mica plate preferably has a thickness T of 0.1 mm or more and 3.0 mm or less.

Although the mica plate in the battery pack of the present invention is thin with a thickness of 0.1 mm or more and 3.0 mm or less, the attaching member is disposed such that stress is prevented from concentrating on a portion of the mica plate as described above.

Therefore, the mica plate is resistant to damage.

A mica plate having a thickness T of less than 0.1 mm is too thin and becomes weak and susceptible to damage.

A mica plate having a thickness T of more than 3.0 mm is likely to be heavy.

In the battery pack of the present invention, the mica plate preferably has a Young's modulus of 110 GPa or less.

When the Young's modulus is 110 GPa or less, the mica plate has high flexibility, and stress therein, if occurs, is likely to be distributed and absorbed.

Therefore, the mica plate is resistant to damage.

In the battery pack of the present invention, preferably, the module has a safety valve on its surface, the mica plate is present between the surface with the safety valve of the module and the case, and the mica plate has a safety valve hole to expose the safety valve.

Even if flame or gas is generated from the module due to thermal runaway, the safety valve can exhaust the flame or gas.

Moreover, the mica plate can prevent the flame or gas from spreading.

In the battery pack of the present invention, preferably, the case includes a housing member and a lid member covering the housing member, the module is contained in the housing member such that the safety valve is closer to the lid member, and the mica plate is disposed between the module and the lid member.

The battery pack having such a structure is easy to produce.

A structure of the present invention includes: an adherend; a mica plate having a first main face and a second main face opposite to the first main face; and an attaching member disposed on a surface of the mica plate to fix the mica plate to the adherend, an area S1 of the attaching member being not less than 5.8 × 10⁻⁶ times an area S2 of the mica plate in a plan view of the mica plate.

In the case where a mica plate has a hole and is fixed to an adherend by a fixing member such as a rivet inserted into the hole, the surrounding area of the hole is likely to have high stress upon impact.

In the present invention, the mica plate is attached to the adherend by an attaching member, while the ratio of the area S1 to the area S2 is within the above range. Thus, the stress can be distributed, thereby preventing damage in the mica plate.

### - Advantageous Effects of Invention

The present invention can provide a battery pack including a mica plate that is resistant to damage and is lightweight.

### BRIEF DESCRIPTION OF DRAWINGS

FIG. 1A illustrates a schematic perspective view of an example of the battery pack according to the first embodiment of the present invention.
FIG. 1B illustrates an A-A line cross-sectional view of FIG. 1A.
FIG. 1C illustrates an exploded view of the battery pack shown in FIG. 1A.
FIG. 2A illustrates a schematic cross-sectional view of an example of an attaching member and its periphery when a mica plate is directly fixed to a module by the attaching member in the battery pack according to the first embodiment of the present invention.
FIG. 2B illustrates a plan view of the attaching member and its periphery shown in FIG. 2A, seen from the first main face side of the mica plate.
FIG. 3 illustrates a schematic plan view of an example of the mica plate included in the battery pack according to the first embodiment of the present invention.
FIG. 4A illustrates a schematic perspective view of an example of the mica plate which has a ridge included in the battery pack according to the first embodiment of the present invention.
FIG. 4B illustrates a schematic perspective view of another example of the mica plate which has a ridge included in the battery pack according to the first embodiment of the present invention.
FIG. 5A illustrates a schematic perspective view of an example of the mica plate which has a protrusion included in the battery pack according to the first embodiment of the present invention.
FIG. 5B illustrates a schematic perspective view of another example of the mica plate which has a protrusion included in the battery pack according to the first embodiment of the present invention.
FIG. 6A illustrates a schematic cross-sectional view of an example of an attaching member and its periphery when a mica plate is fixed to a module via a connecting member by the attaching member in the battery pack according to the second embodiment of the present invention.
FIG. 6B illustrates a plan view of the attaching member and its periphery shown in FIG. 6A, seen from the first main face side of the mica plate.
FIG. 7A illustrates a schematic cross-sectional view of an example of the battery pack according to the third embodiment of the present invention.
FIG. 7B illustrates a schematic perspective view of an example of a mica plate included in the battery pack according to the third embodiment of the present invention.
FIG. 8 illustrates a schematic cross-sectional view of an example of the battery pack according to the fourth embodiment of the present invention.

### DESCRIPTION OF EMBODIMENTS

The battery pack of the present invention will be specifically described below. The present invention is not limited to the following embodiments, and may be appropriately modified and applied without departing from the gist of the present invention. The present invention also includes a combination of two or more of individual desirable embodiments described below.

### (First Embodiment)

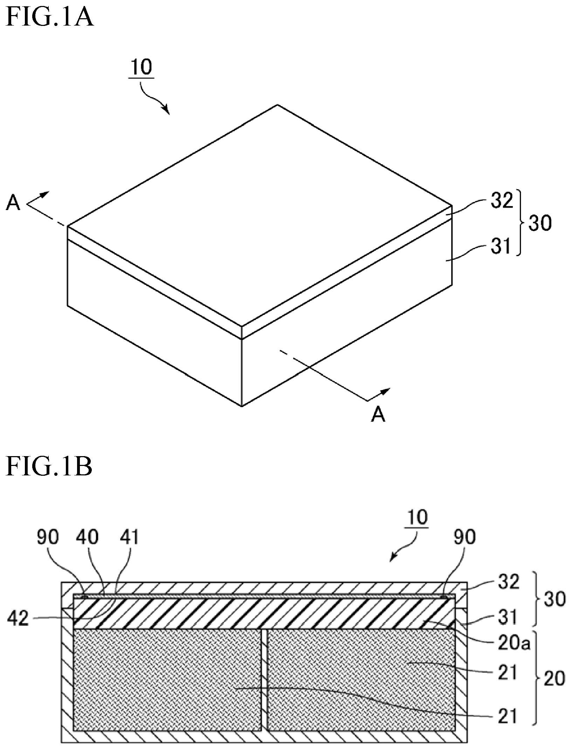

FIG. 1A illustrates a schematic perspective view of an example of the battery pack according to the first embodiment of the present invention.

FIG. 1B illustrates an A-A line cross-sectional view of FIG. 1A.

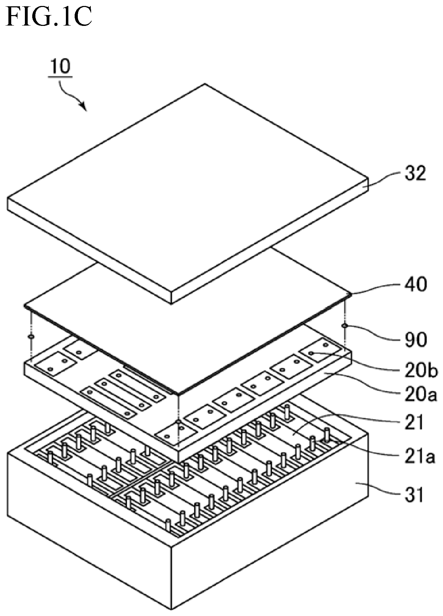

FIG. 1C illustrates an exploded view of the battery pack shown in FIG. 1A.

A battery pack 10 shown in FIG. 1A, FIG. 1B, and FIG. 1C includes a module 20 with a plurality of battery cells 21 and a case 30 containing the module 20.

The case 30 includes a housing member 31 and a lid member 32 covering the housing member 31. The housing member 31 contains the module 20.

The battery pack 10 includes a mica plate 40 disposed between the module 20 and the lid member 32.

The mica plate 40 has a first main face 41 and a second main face 42 opposite to the first main face 41.

The mica plate 40 is disposed such that the first main face 41 faces the case 30 and the second main face 42 faces the module 20.

Each battery cell 21 stores electric power and is preferably a rechargeable battery known as secondary battery. Examples of the secondary battery include lithium-ion batteries, nickel-metal hydride batteries, and sodium ion batteries.

Each battery cell 21 shown in FIG. 1A, FIG. 1B, and FIG. 1C has a rectangular parallelepiped shape. In the battery pack of the present invention, each battery cell may have a three-dimensional shape other than the rectangular parallelepiped shape (e.g., a cubic shape or a modified shape).

In the module 20, a plurality of the battery cells 21 are arranged in a row and fixed by a connecting module member 20a.

Each battery cell 21 has a terminal 21a. The adjacent battery cells 21 are electrically connected to each other by busbars 20b which are disposed on the connecting module member 20a and connect the terminals 21a.

Each busbar 20b is a conductive metal member having a flat plate shape. Examples of the material of the busbars 20b include copper, copper alloys, stainless steel (SUS), and aluminum.

The busbars 20b may be fixed to the terminals 21a with any fixing means (for example, screw fastening, welding).

As shown in FIG. 1C, the mica plate 40 is disposed on the connecting module member 20a and is fixed by an attaching member 90.

The fixing of the mica plate 40 by the attaching member 90 will be described in detail below.

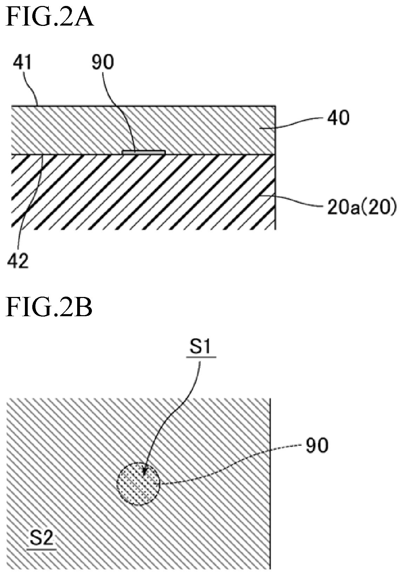

FIG. 2A illustrates a schematic cross-sectional view of an example of an attaching member and its periphery when a mica plate is directly fixed to a module by the attaching member in the battery pack according to the first embodiment of the present invention.

FIG. 2B illustrates a plan view of the attaching member and its periphery shown in FIG. 2A, seen from the first main face side of the mica plate.

As shown in FIG. 2A, the mica plate 40 is attached to the module 20 by the attaching member 90, so that they are fixed to each other.

As shown in FIG. 2B, in a plan view of the mica plate, the area S1 of the attaching member is not less than 5.8 × 10⁻⁶ times the area S2 of the mica plate.

In the case where a mica plate has a hole and is fixed to the module by a fixing member such as a rivet inserted into the hole, the surrounding area of the hole is likely to have high stress upon impact.

When the mica plate 40 is attached to the module 20 by the attaching member 90, while the ratio of the area S1 to the area S2 is within the above range, the stress can be distributed, thereby preventing damage in the mica plate 40.

The damage resistance of the mica plate 40 is also influenced by the thickness of the mica plate 40.

For example, when the mica plate 40 has a thickness of 1.0 mm or more, the area S1 is preferably not less than 1.4 × 10⁻³ times the area S2.

When the mica plate 40 has a thickness of 0.5 mm or more and less than 1.0 mm, the area S1 is preferably not less than 2.5 × 10⁻³ times the area S2, more preferably not less than 1.3 × 10⁻² times the area S2.

When the mica plate 40 has a thickness of 0.3 mm or more and less than 0.5 mm, the area S1 is preferably not less than 6.0 × 10⁻³ times the area S2, more preferably not less than 1.9 × 10⁻² times the area S2.

When the mica plate 40 has a thickness of 0.1 mm or more and less than 0.3 mm, the area S1 is preferably not less than 8.1 × 10⁻³ times the area S2, more preferably not less than 2.4 × 10⁻² times the area S2.

The attaching member 90 may be a cured product of an adhesive or an insert-molded product.

Such an attaching member can suitably attach the mica plate to the module.

Specifically, the material of the attaching member 90 may be a resin such as a silicone resin, an acrylic resin, or an epoxy resin, or may be a hot-melt adhesive such as polyamide, polyethylene, or polypropylene.

The thickness of the attaching member 90 is preferably 0.001 to 2 mm, more preferably 0.01 to 1 mm, still more preferably 0.05 to 0.5 mm.

Next, the mica plate 40 will be described below.

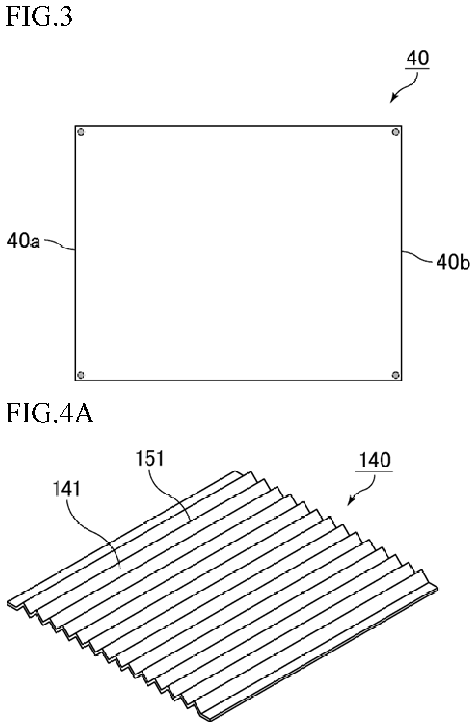

FIG. 3 illustrates a schematic plan view of an example of the mica plate included in the battery pack according to the first embodiment of the present invention.

The mica plate 40 shown in FIG. 3 is tetragonal in a plan view. The mica plate 40 in a plan view has an outline including a first side 40a and a second side 40b opposite to the first side 40a.

Attaching members are disposed (at positions indicated with dashed lines in FIG. 3) on the end portion of the mica plate 40 to which the first side 40a belongs and the end portion of the mica plate 40 to which the second side 40b belongs, and the mica plate is fixed to a connecting module member.

An attaching member may be disposed at one position on an end portion of the mica plate 40, or attaching members may be disposed at a plurality of positions. The attaching member(s) may be disposed in either a point-like or a linear pattern.

Preferably, the shape of the mica plate 40 is appropriately determined according to the shape of the battery pack.

For example, the shape of the mica plate 40 in a plan view may be any of various shapes such as a triangle, a tetragon, a circle, and a shape of a cut-out portion of any of these shapes.

The lower limit of the thickness T of the mica plate 40 is preferably 0.1 mm or more, more preferably 0.3 mm or more, still more preferably 0.5 mm or more.

The upper limit of the thickness T of the mica plate 40 is preferably 3.0 mm or less, more preferably 2.0 mm or less, still more preferably 1.0 mm or less.

When the thickness T of the mica plate 40 is within the above range, the mica plate 40 has a reduced weight and is easy to handle.

If the mica plate 40 has a thickness T of less than 0.1 mm, it is too thin and becomes weak and susceptible to damage.

If the mica plate 40 has a thickness T of more than 3.0 mm, the mica plate 40 is heavy and difficult to use.

The Young's modulus of the mica plate 40 is preferably 110 GPa or less, more preferably 20 to 80 GPa.

When the Young's modulus is 110 GPa or less, the mica plate 40 has high flexibility, and stress therein, if occurs, is likely to be distributed and absorbed.

Therefore, the mica plate 40 is resistant to damage.

The mica plate 40 has a density of preferably 1.3 to 2.7 g/cm³, more preferably 1.7 to 2.3 g/cm³.

The mica plate 40 may have a ridge or a protrusion.

This mode will be described below using drawings.

FIG. 4A illustrates a schematic perspective view of an example of the mica plate which has a ridge included in the battery pack according to the first embodiment of the present invention.

A mica plate 140 shown in FIG. 4A has a plurality of ridges 151 on its first main face 141 side.

Each ridge 151 has a mountain-fold shape.

The ridges 151 of the mica plate 140 allow the mica plate 140 to have a high second moment of the cross section.

Since each ridge 151 has a mountain-fold shape, the weight can be reduced as compared to closely spaced ridges.

Moreover, the mica plate 140 having a high second moment of the cross section is resistant to damage even when the battery pack including the mica plate 140 is placed in an environment with vibrations.

The principle thereof will be described below.

If the natural frequency of the mica plate is equal to the frequency of the surroundings, resonance occurs, which is likely to cause damage in the mica plate. Conversely, when the natural frequency of the mica plate is higher than the vibration frequency of the surrounding environment, resonance does not occur, so that stress is less likely to occur in the mica plate.

The natural frequency of the mica plate is influenced by the length, Young's modulus, density, cross-sectional area, and second moment of the cross section of the mica plate.

For example, the natural frequency ω of an object with its both ends being fixed is calculated by the following formula (1):
[Math 1] $ω = {\left(\frac{π}{l}\right)}^{2} \sqrt{\frac{EI}{ρA}}$ wherein l represents a length, E represents a Young's modulus, I represents a second moment of the cross section, ρ represents a density, and A represents a cross-sectional area.

For example, a higher second moment of the cross section leads to a higher natural frequency.

The mica plate 140 having a plurality of the ridges 151 has a higher second moment of the cross section than a flat mica plate having the same weight. In other words, the mica plate 140 has a higher second moment of the cross section per unit weight.

Therefore, even when the battery pack is placed in an environment with vibrations, the natural frequency of the mica plate 140 is likely to be higher than the vibration frequency of the surrounding environment. Thus, the mica plate 140 is resistant to damage.

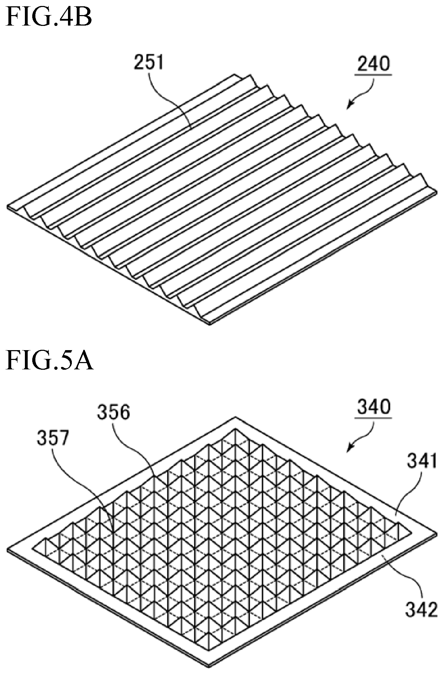

FIG. 4B illustrates a schematic perspective view of another example of the mica plate which has a ridge included in the battery pack according to the first embodiment of the present invention.

A mica plate 240 shown in FIG. 4B has the same shape as the mica plate 140, except that ridges 251 are closely spaced.

The mica plate 240 even having such a shape has a high second moment of the cross section. Therefore, the mica plate 240 is resistant to damage.

The mica plates (140, 240) shown in FIG. 4A and FIG. 4B each have a plurality of ridges on its first main face side. Yet, in the battery pack according to the first embodiment of the present invention, the mica plate may have a single ridge on its first main face side.

Moreover, in the battery pack according to the first embodiment of the present invention, the mica plate may have one or more ridges on its second main face side.

In the mica plates shown in FIG. 4A and FIG. 4B, ridges are present along the long-side direction of the mica plate. Yet, in the battery pack according to the first embodiment of the present invention, the ridges may be present in any direction. For example, the ridges may be present along the short-side direction of the mica plate.

Even such a mode of the mica plate has a high second moment of the cross section. Therefore, the mica plate is resistant to damage.

FIG. 5A illustrates a schematic perspective view of an example of the mica plate which has a protrusion included in the battery pack according to the first embodiment of the present invention.

A mica plate 340 shown in FIG. 5A has a plurality of first protrusions 356 on its first main face 341 side and a plurality of second protrusions 357 on its second main face 342 side.

Each first protrusion 356 has a quadrangular pyramidal shape and results from the recessing of the mica plate 340 from the second main face 342 side toward the first main face 341 side.

Each second protrusion 357 has a quadrangular pyramidal shape and results from the recessing of the mica plate 340 from the first main face 341 side toward the second main face 342 side.

In a plan view of the mica plate 340, the first protrusions 356 and the second protrusions 357 are alternately arranged linearly in longitudinal and transverse directions.

In other words, the first projections 356 and the second projections 357 are arranged in a checkered pattern.

The mica plate 340 having a plurality of the first protrusions 356 and the second protrusions 357 has a higher second moment of the cross section than a flat mica plate having the same weight. In other words, the mica plate 340 has a higher second moment of the cross section per unit weight.

Therefore, even when the battery pack is placed in an environment with vibrations, the natural frequency of the mica plate 340 is likely to be higher than the vibration frequency of the surrounding environment. Thus, the mica plate 340 is resistant to damage.

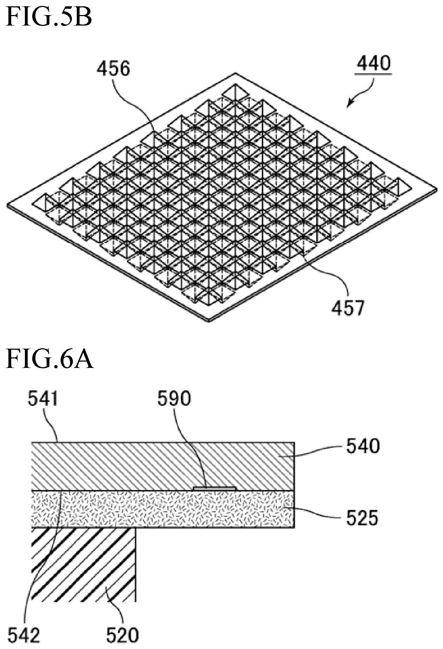

FIG. 5B illustrates a schematic perspective view of another example of the mica plate which has a protrusion included in the battery pack according to the first embodiment of the present invention.

A mica plate 440 shown in FIG. 5B has the same shape as the mica plate 340, except that first protrusions 456 and second protrusions 457 are closely spaced.

The mica plate 440 even having such a shape has a high second moment of the cross section. Therefore, the mica plate 440 is resistant to damage.

The mica plates (340, 440) shown in FIG. 5A and FIG. 5B each have a plurality of first protrusions and a plurality of second protrusions. Yet, in the battery pack according to the first embodiment of the present invention, the mica plate may have only a plurality of first protrusions or may have only a single first protrusion.

In the mica plates shown in FIG. 5A and FIG. 5B, the first protrusions and the second protrusions each have a quadrangular pyramidal shape. Yet, in the battery pack according to the first embodiment of the present invention, the first protrusions and the second protrusions each may have any convex shape, for example, a conical shape or a triangular pyramidal shape. Moreover, the first protrusions and the second protrusions each may have a columnar shape such as a cylindrical shape, a triangular prismatic shape, or a quadrangular prismatic shape.

Even such a mode of the mica plate has a high second moment of the cross section. Therefore, the mica plate is resistant to damage.

### (Second embodiment)

Next, the battery pack according to the second embodiment of the present invention will be described below.

The battery pack according to the second embodiment of the present invention differs from the battery pack according to the first embodiment in that a module is provided with a connecting member, and an attaching member attaches the connecting member to a mica plate.

Therefore, the battery pack according to the second embodiment will be described below while focusing on the attaching member and its periphery when the mica plate is attached to the module by the attaching member via the connecting member.

FIG. 6A illustrates a schematic cross-sectional view of an example of an attaching member and its periphery when a mica plate is fixed to a module via a connecting member by the attaching member in the battery pack according to the second embodiment of the present invention.

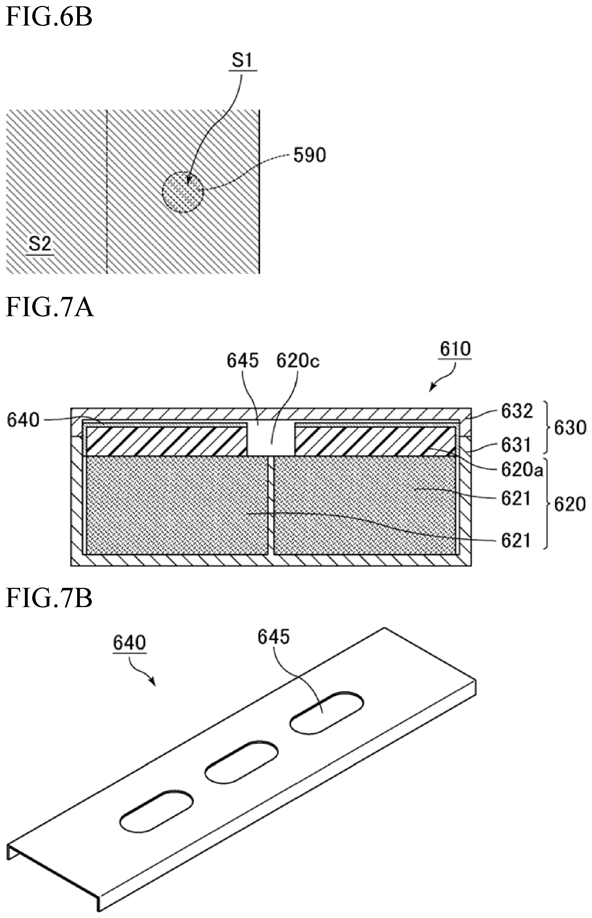

FIG. 6B illustrates a plan view of the attaching member and its periphery shown in FIG. 6A, seen from the first main face side of the mica plate.

As shown in FIG. 6A, a module 520 is provided with a connecting member 525.

The connecting member 525 may be fixed to the module 520 with, for example, a screw or an adhesive or may be welded to the module 520.

The mica plate 540 is attached to the connecting member 525 by the attaching member 590, so that they are fixed to each other.

As shown in FIG. 6B, in a plan view of the mica plate 540, the area S1 of the attaching member 590 is not less than 5.8 × 10⁻⁶ times the area S2 of the mica plate 540.

In the case where a mica plate has a hole and is fixed to the module by a fixing member such as a rivet inserted into the hole, the surrounding area of the hole is likely to have high stress upon impact.

When the mica plate 540 is attached to the module 520 via the connecting member 525 by the attaching member 590, while the ratio of the area S1 to the area S2 is within the above range, the stress can be distributed, thereby preventing damage in the mica plate 540.

The damage resistance of the mica plate 540 is also influenced by the thickness of the mica plate 540.

For example, when the mica plate 540 has a thickness of 1.0 mm or more, the area S1 is preferably not less than 1.4 × 10⁻³ times the area S2.

When the mica plate 540 has a thickness of 0.5 mm or more and less than 1.0 mm, the area S1 is preferably not less than 2.5 × 10⁻³ times the area S2, more preferably not less than 1.3 × 10⁻² times the area S2.

When the mica plate 540 has a thickness of 0.3 mm or more and less than 0.5 mm, the area S1 is preferably not less than 6.0 × 10⁻³ times the area S2, more preferably not less than 1.9 × 10⁻² times the area S2.

When the mica plate 540 has a thickness of 0.1 mm or more and less than 0.3 mm, the area S1 is preferably not less than 8.1 × 10⁻³ times the area S2, more preferably not less than 2.4 × 10⁻² times the area S2.

The material of the connecting member 525 is not limited and may be aluminum, stainless steel, copper, or a resin cured product.

The mode in which the mica plate 540 is fixed to the module 520 is described above. Yet, in the battery pack of the present invention, the mica plate may be fixed to the case.

The preferred embodiments of the mica plate 540 other than the above-described embodiments in the battery pack according to the second embodiment of the present invention are the same as those of the mica plate 40 in the battery pack 10 according to the first embodiment of the present invention.

### (Third embodiment)

Next, the battery pack according to the third embodiment of the present invention will be described below.

The battery pack according to the third embodiment of the present invention differs from the battery pack according to the first embodiment in that the module has a safety valve on its surface, and the mica plate has a safety valve hole to expose the safety valve.

Such a battery pack will be described below using drawings.

FIG. 7A illustrates a schematic cross-sectional view of an example of the battery pack according to the third embodiment of the present invention.

FIG. 7B illustrates a schematic perspective view of an example of a mica plate included in the battery pack according to the third embodiment of the present invention.

A battery pack 610 shown in FIG. 7A includes a module 620 with a plurality of battery cells 621 and a case 630 containing the module 620.

The case 630 includes a housing member 631 and a lid member 632 covering the housing member 631. The housing member 631 contains the module 620.

The battery pack 610 includes a mica plate 640 disposed between the module 620 and the lid member 632.

In the module 620, a plurality of the battery cells 621 are fixed by a connecting module member 620a.

In the battery pack 610, a safety valve 620c is formed in the connecting module member 620a which defines the surface of the module 620.

As shown in FIG. 7A and FIG. 7B, the mica plate 640 has a safety valve hole 645 to expose the safety valve 620c.

Even if flame or gas is generated from the module due to thermal runaway, the safety valve can exhaust the flame or gas.

Moreover, the mica plate can prevent the flame or gas from spreading.

In the battery pack 610, the mica plate 640 is attached to the connecting module member 620a by an attaching member (not shown).

In a plan view of the mica plate 640, the area S1 of the attaching member is not less than 5.8 × 10⁻⁶ times the area S2 of the mica plate.

In the case where a mica plate has a hole and is fixed to the module by a fixing member such as a rivet inserted into the hole, the surrounding area of the hole is likely to have high stress upon impact.

When the mica plate 640 is attached to the module 620 by the attaching member, while the ratio of the area S1 to the area S2 is within the above range, the stress can be distributed, thereby preventing damage in the mica plate 640.

In calculating the area S2 of the mica plate 640, the safety valve hole 645 is regarded as being filled.

The damage resistance of the mica plate 640 is also influenced by the thickness of the mica plate 640.

For example, when the mica plate 640 has a thickness of 1.0 mm or more, the area S1 is preferably not less than 1.4 × 10⁻³ times the area S2.

When the mica plate 640 has a thickness of 0.5 mm or more and less than 1.0 mm, the area S1 is preferably not less than 2.5 × 10⁻³ times the area S2, more preferably not less than 1.3 × 10⁻² times the area S2.

When the mica plate 640 has a thickness of 0.3 mm or more and less than 0.5 mm, the area S1 is preferably not less than 6.0 × 10⁻³ times the area S2, more preferably not less than 1.9 × 10⁻² times the area S2.

When the mica plate 640 has a thickness of 0.1 mm or more and less than 0.3 mm, the area S1 is preferably not less than 8.1 × 10⁻³ times the area S2, more preferably not less than 2.4 × 10⁻² times the area S2.

In the battery pack 610, the module 620 may be provided with a connecting member, and the attaching member may attach the connecting member to the mica plate 640.

The preferred materials, shapes, and other characteristics of the battery cell 621, the case 630, the mica plate 640, and the attaching member in the battery pack 610 are the same as those of the battery cell 21, the case 30, the mica plate 40, and the attaching member in the battery pack 10 according to the first embodiment of the present invention.

### (Fourth embodiment)

Next, the battery pack according to the fourth embodiment of the present invention will be described below.

The battery pack according to the fourth embodiment of the present invention may include a mica plate that covers the entire circumference of a module.

Such a battery pack will be described below using drawings.

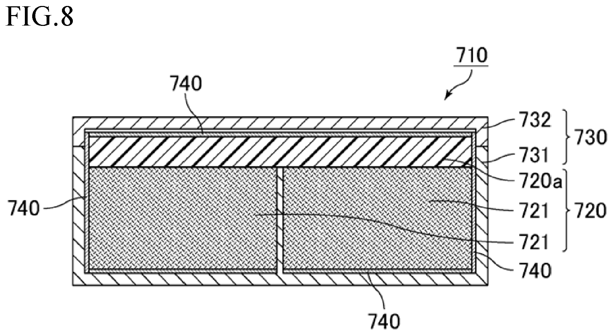

FIG. 8 illustrates a schematic cross-sectional view of an example of the battery pack according to the fourth embodiment of the present invention.

A battery pack 710 shown in FIG. 8 includes a module 720 with a plurality of battery cells 721 and a case 730 containing the module 720.

The case 730 includes a housing member 731 and a lid member 732 covering the housing member 731. The housing member 731 contains the module 720.

In the module 720, a plurality of the battery cells 721 are fixed by a connecting module member 720a.

In the battery pack 710, the mica plate 740 is attached to the connecting module member 720a by an attaching member (not shown).

In a plan view of the mica plate 740, the area S1 of the attaching member is not less than 5.8 × 10⁻⁶ times the area S2 of the mica plate.

In the case where a mica plate has a hole and is fixed by a fixing member such as a rivet inserted into the hole, the surrounding area of the hole is likely to have high stress upon impact.

When the mica plate 740 is attached to the module 720 by the attaching member, while the ratio of the area S1 to the area S2 is within the above range, the stress can be distributed, thereby preventing damage in the mica plate 740.

The damage resistance of the mica plate 740 is also influenced by the thickness of the mica plate 740.

For example, when the mica plate 740 has a thickness of 1.0 mm or more, the area S1 is preferably not less than 1.4 × 10⁻³ times the area S2.

When the mica plate 740 has a thickness of 0.5 mm or more and less than 1.0 mm, the area S1 is preferably not less than 2.5 × 10⁻³ times the area S2, more preferably not less than 1.3 × 10⁻² times the area S2.

When the mica plate 740 has a thickness of 0.3 mm or more and less than 0.5 mm, the area S1 is preferably not less than 6.0 × 10⁻³ times the area S2, more preferably not less than 1.9 × 10⁻² times the area S2.

When the mica plate 740 has a thickness of 0.1 mm or more and less than 0.3 mm, the area S1 is preferably not less than 8.1 × 10⁻³ times the area S2, more preferably not less than 2.4 × 10⁻² times the area S2.

In the battery pack 710, the module 720 may be provided with a connecting member, and the attaching member may attach the connecting member to the mica plate 740.

In the battery pack 710, the mica plate 740 covers the entire circumference of the module 720.

When the mica plate 740 covers the entire circumference of the module 720, the mica plate 740 can prevent flame or gas from spreading, regardless of the location where the flame or gas generates.

Examples of the method of covering the entire circumference of the module 720 with the mica plate 740 include a method involving molding separate parts of the mica plate 740 and placing the separate parts around the module 720.

The preferred materials, shapes, and other characteristics of the battery cell 721, the case 730, the mica plate 740, and the attaching member in the battery pack 710 are the same as those of the battery cell 21, the case 30, the mica plate 40, and the attaching member in the battery pack 10 according to the first embodiment of the present invention.

### (Other embodiments)

In the battery packs described in the first to fourth embodiments, the case includes a housing member and a lid member. Yet, the case in the battery pack of the present invention may have any shape as long as it can contain the module. For example, the case may include only a housing member with no lid member, or the shape may be either a rectangular tube or a cylindrical tube.

In the battery pack described in the first embodiment, the mica plate is fixed to the module by the attaching member. Yet, the mica plate may be fixed to the case by the attaching member in the battery pack of the present invention.

In the battery pack described in the second embodiment, the module is provided with the connecting member. Yet, the case may be provided with the connecting member in the battery pack of the present invention.

In this case, the mica plate is attached to the case via the connecting member.

In the battery pack described in the first embodiment, the adjacent battery cells are electrically connected to each other by the busbars. Yet, as long as the adjacent battery cells are electrically connected to each other, they may be connected by, for example, copper lines or a cured conductive paste.

Herein, the following matters are disclosed.

The disclosure (1) relates to a battery pack, including: a module with a plurality of battery cells; a case containing the module; and a mica plate disposed between the module and the case and having a first main face and a second main face opposite to the first main face, the battery pack further including an attaching member disposed on a surface of the mica plate to fix the mica plate, an area S1 of the attaching member being not less than 5.8 × 10⁻⁶ times an area S2 of the mica plate in a plan view of the mica plate.

The disclosure (2) relates to the battery pack according to the disclosure (1), wherein the attaching member attaches at least one of the module or the case to the mica plate.

The disclosure (3) relates to the battery pack according to the disclosure (1), wherein at least one of the module or the case is provided with a connecting member, and the attaching member attaches the connecting member to the mica plate.

The disclosure (4) relates to the battery pack according to any one of the disclosures (1) to (3), wherein the mica plate is attached by a plurality of the attaching members.

The disclosure (5) relates to the battery pack according to any one of the disclosures (1) to (4), wherein the mica plate is substantially tetragonal in a plan view, the mica plate in a plan view has an outline including a first side and a second side opposite to the first side, and an end portion of the mica plate to which the first side belongs and an end portion of the mica plate to which the second side belongs are fixed by the attaching members.

The disclosure (6) relates to the battery pack according to any one of the disclosures (1) to (5), wherein in a plan view of the mica plate, an area S1n of each attaching member is not less than 5.8 × 10⁻⁶ times the area S2 of the mica plate.

The disclosure (7) relates to the battery pack according to any one of the disclosures (1) to (6), wherein the attaching member is a cured product of an adhesive.

The disclosure (8) relates to the battery pack according to any one of the disclosures (1) to (6), wherein the attaching member is an insert-molded product.

The disclosure (9) relates to the battery pack according to any one of the disclosures (1) to (8), wherein the mica plate has a ridge extending in a first direction on its first main face side.

The disclosure (10) relates to the battery pack according to any one of the disclosures (1) to (8), wherein the mica plate has a first protrusion on its first main face side.

The disclosure (11) relates to the battery pack according to any one of the disclosures (1) to (10), wherein the mica plate has a thickness T of 0.1 mm or more and 3.0 mm or less.

The disclosure (12) relates to the battery pack according to any one of the disclosures (1) to (11), wherein the mica plate has a Young's modulus of 110 GPa or less.

The disclosure (13) relates to the battery pack according to any one of the disclosures (1) to (12), wherein the module has a safety valve on its surface, the mica plate is present between the surface with the safety valve of the module and the case, and the mica plate has a safety valve hole to expose the safety valve.

The disclosure (14) relates to the battery pack according to the disclosure (13), wherein the case includes a housing member and a lid member covering the housing member, the module is contained in the housing member such that the safety valve is closer to the lid member, and the mica plate is disposed between the module and the lid member.

The disclosure (15) relates to a structure, including: an adherend; a mica plate having a first main face and a second main face opposite to the first main face; and an attaching member disposed on a surface of the mica plate to fix the mica plate to the adherend, an area S1 of the attaching member being not less than 5.8 × 10⁻⁶ times an area S2 of the mica plate in a plan view of the mica plate.

### REFERENCE SIGNS LIST

10, 610, 710 battery pack
20, 520, 620, 720 module
20a, 620a, 720a connecting module member
20b busbar
21, 621, 721 battery cell
21a terminal
30, 630, 730 case
31, 631, 731 housing member
32, 632, 732 lid member
40, 140, 240, 340, 440, 540, 640, 740 mica plate
40a first side
40b second side
41, 141, 341 first main face
42, 342 second main face
90, 590 attaching member
151, 251 ridge
356, 456 first protrusion
357, 457 second protrusion
525 connecting member
620c safety valve
645 safety valve hole

## Claims

1. A battery pack, comprising:
a module with a plurality of battery cells;
a case containing the module; and
a mica plate disposed between the module and the case and having a first main face and a second main face opposite to the first main face,
the battery pack further comprising an attaching member disposed on a surface of the mica plate to fix the mica plate,
an area S1 of the attaching member being not less than 5.8 × 10⁻⁶ times an area S2 of the mica plate in a plan view of the mica plate.

2. The battery pack according to claim 1,
wherein the attaching member attaches at least one of the module or the case to the mica plate.

3. The battery pack according to claim 1,
wherein at least one of the module or the case is provided with a connecting member, and
the attaching member attaches the connecting member to the mica plate.

4. The battery pack according to any one of claims 1 to 3,
wherein the mica plate is attached by a plurality of the attaching members.

5. The battery pack according to any one of claims 1 to 4,
wherein the mica plate is substantially tetragonal in a plan view,
the mica plate in a plan view has an outline including a first side and a second side opposite to the first side, and
an end portion of the mica plate to which the first side belongs and an end portion of the mica plate to which the second side belongs are fixed by the attaching members.

6. The battery pack according to any one of claims 1 to 5,
wherein in a plan view of the mica plate, an area S1n of each attaching member is not less than 5.8 × 10⁻⁶ times the area S2 of the mica plate.

7. The battery pack according to any one of claims 1 to 6,
wherein the attaching member is a cured product of an adhesive.

8. The battery pack according to any one of claims 1 to 6,
wherein the attaching member is an insert-molded product.

9. The battery pack according to any one of claims 1 to 8,
wherein the mica plate has a ridge extending in a first direction on its first main face side.

10. The battery pack according to any one of claims 1 to 8,
wherein the mica plate has a first protrusion on its first main face side.

11. The battery pack according to any one of claims 1 to 10,
wherein the mica plate has a thickness T of 0.1 mm or more and 3.0 mm or less.

12. The battery pack according to any one of claims 1 to 11,
wherein the mica plate has a Young's modulus of 110 GPa or less.

13. The battery pack according to any one of claims 1 to 12,
wherein the module has a safety valve on its surface,
the mica plate is present between the surface with the safety valve of the module and the case, and
the mica plate has a safety valve hole to expose the safety valve.

14. The battery pack according to claim 13,
wherein the case includes a housing member and a lid member covering the housing member,
the module is contained in the housing member such that the safety valve is closer to the lid member, and
the mica plate is disposed between the module and the lid member.

15. A structure, comprising:
an adherend;
a mica plate having a first main face and a second main face opposite to the first main face; and
an attaching member disposed on a surface of the mica plate to fix the mica plate to the adherend,
an area S1 of the attaching member being not less than 5.8 × 10⁻⁶ times an area S2 of the mica plate in a plan view of the mica plate.
